# EUROPEAN PATENT APPLICATION

(11) **EP 1 052 205 A1**
(43) Date of publication of application: **15.11.2000**
(21) Application number: 00201638.4
(22) Date of filing: 04.05.2000
(51) Int. Cl.: B65G 67/08, B65G 61/00

(54) **Device for continuous transport of packed goods**

(30) Priority: 06.05.1999 NL 1011978
(71) Applicant: Adelerhof, Pieter Jan, 3774 TD Kootwijkerbroek (NL)
(72) Inventor: Adelerhof, Pieter Jan, 3774 TD Kootwijkerbroek (NL)
(74) Representative: Ferguson, Alexander

(57) **Abstract**

The invention relates to a device for continuous transport of packed goods, such as barrels, boxes and crates, in which an elongated end of the transport device is adapted to extend into a container, trailer and the like, for loading or unloading the packed goods in the container.

According to the invention a manipulator is arranged at the end of the transport device, which manipulator is provided with a tool to engage the packed goods, the manipulator being designed such that with the help of the tool packed goods can be placed from the transport device into the container, and that packed goods can be placed out of the container on the transport device, in which the engagement tool is moveable in longitudinal direction along the end of the transport device.

## Description

The invention relates to a device for continuous transport of packed goods, such as barrels, boxes and crates, in which an elongated end of the transport device is adapted to extend into a container, trailer and the like, for loading or unloading the packed goods in the container.

Such a device is known and is supplied by applicant for loading packed goods from for instance a factory or an enterprise, such as a distribution centre, into a trailer of a lorry or in a container on a lorry, or to transport the packed goods out of a lorry into the factory. The device is usually designed like a belt conveyor, and preferably is shaped like a telescopic conveyor. In retracted position the telescopic conveyor is accommodated entirely within the loading station of the factory, so that the loading door of the loading station can be closed. When a lorry is parked with its rear end near the loading door for loading or unloading, the loading door is opened and the telescoping end of the telescopic conveyor can be introduced into the lorry. When the lorry becomes fuller or more empty the length of the telescopic conveyor can easily be adjusted, whereas the fixed end of the telescopic conveyor within the loading station remains connected to a possible internal conveyor system of the factory's. The telescopic conveyor also takes up little space within the factory.

A drawback of the known device is that the packed goods at the end of the conveyor when loading the container or trailer have to be stacked manually into the container, and when unloading have to be manually placed on the conveyor. Another drawback is that wide packed goods, for instance a crate having the width of the container or trailer, cannot be manually placed out of the lorry onto the conveyor or from the conveyor into the lorry. This kind of packed goods will then have to be transported by means of a forklift truck. A drawback of this is that continuous transport cannot be effected. Additionally it is also difficult with a forklift truck to accurately manipulate, so that there is the danger that the crate gets stuck in the lorry, involving all sorts of consequences.

It is an object of the invention to provide a device for continuous transport with which a container or trailer can be loaded or unloaded not using manual power.

It is another object of the invention to provide a device for continuous transport with which loading and unloading can be carried out quickly and in a simple manner.

It is yet another object of the invention to provide a device for continuous transport with which loading and unloading can be carried out (semi-) automatically.

It is yet another object of the invention to provide a device for continuous transport with which packed goods having the width of the container or trailer can be loaded or unloaded.

According to the invention one or several of these objects are achieved with a device of the kind mentioned in the preamble, in which a manipulator is arranged at the end of the transport device, which manipulator is provided with a tool to engage the packed goods, the manipulator being designed such that with the help of the tool packed goods can be placed from the transport device into the container, and that packed goods can be placed out of the container on the transport device, in which the engagement tool is moveable in longitudinal direction along the end of the transport device.

With the help of the manipulator with the engagement tool attached to it is now possible to engage for instance barrels which have been supplied from the factory over the conveyor to its end, to lift them from the conveyor and place them in the lorry, and vice versa. Manual power then is no longer necessary.

The packed goods can then be moved straight forward from the conveyor. When using the manipulator the transport device itself does not need to be moved in longitudinal direction. The manipulator only needs to take up a little operation space here in horizontal and in vertical direction next to the transport device.

Preferably the engagement tool is moveable in vertical direction with respect to the end of the transport device. As a result the packed goods can be placed on the floor of the container, or on packed goods placed earlier on.

According to a first preferred embodiment the engagement tool is rotatable substantially about its own vertical axle. As a result the packed good engaged, for instance a box, which has been taken with the engagement tool of the conveyor, can be rotated in the correct position prior to placing it in the container, so that the packed goods are loaded as close to each other as possible. When unloading, the packed goods can be placed on the conveyor by rotation into the correct position and at the right location, namely in the middle of the width of the conveyor.

Preferably the engagement tool is swivelling about a vertical axle which is situated at a distance from the engagement tool. As a result packed goods engaged can be brought on either side of the longitudinal axial line of the elongated end of the conveyor, so that the packed good can be placed in the latitudinal direction of the trailer or container next to each other. When unloading the packed good positioned on either side of the longitudinal axial line can be engaged.

Preferably the vertical swivel axle intersects the longitudinal axis of the end of the transport device and the vertical swivel axle is moveable with the engagement tool in longitudinal direction with respect to the transport device. As a result the movement of the engagement tool to either side of the transport device is symmetrical, which simplifies the control of the engagement tool. Because of the coupling with the displacement in longitudinal direction the engagement tool is easy to manipulate.

Preferably the manipulator comprises horizontal guiding means in order to move the manipulator along a guidance at the bottom side of the end of the transport device. Because of the guidance at the bottom side of the transport device the transport of the packed good on the transport device is not hindered.

Preferably the manipulator has a substantially horizontal arm of which an end is connected to the horizontal guiding means to be swivelling about a vertical axle, and of which the other end is connected to the vertical guiding means for the tool, and more preferably the vertical guiding means are rotatable about their vertical axle. In this way the tool has four degrees of freedom, as a result of which the tool is able to place the packed good into the container or trailer at any location at any wanted level and in any wanted position, or able to engage the packed goods in the container in order to place it on the transport device.

Preferably pneumatic driving means are arranged to drive the manipulator. In this way a quick and reliable operation is realised.

Preferably control means are provided to (semi-)automatically operate the manipulator when loading a trailer or container, and to (semi-) automatically operate the manipulator when unloading from a trailer or container.

According to an embodiment the tool is provided with grippers to engage the packed goods. Preferably, however, the tool is provided with operable suction cups to engage/hold the packed goods.

Preferably the tool comprises a vertically moveable trolley and a carrier for the suction cups, in which means are present between the carrier and the trolley for adjusting the distance therebetween in horizontal direction. In this way the horizontal distance between a vertical guidance for the trolley and the suction cup can be enlarged when necessary in order to engage a stacked load but said load being placed somewhat rearwards with respect to the rest of the stack.

Preferably the adjustment means comprise bellows that are expandable in horizontal direction, in which preferably between the carrier and the trolley a biassing means is present for urging the carrier and the trolley towards each other when the bellows is relieved.

It may occur that in the horizontal plane the load is slightly tilted with respect to the carrier with suction cup. Levelling can then take place when the carrier and the trolley are connected to each other by means of a hinge having a vertical axis, which preferably comprises a rubber bearing sleeve, in order to also level in the vertical plane when the load is slightly tilted.

Preferably between the trolley and the carrier a lifting tongs construction is present parallel to the bellows for stiffening the connection against bending under gravity.

Preferably several suction cups are present next to each other for engaging a same load. Said suction cups are preferably arranged on the same carrier.

Several loads can simultaneously be engaged when several carriers are positioned next to each other, preferably two, which, independent from each other, are connected to the trolley.

In an alternative development the manipulator, on both sides of the transport device, comprises a means to vertically move a tool at the end of the means. Said lifting means as a result are able to lift packed goods, such as a crate, which projects from either side of the conveyor from the conveyor, after which the manipulator as a whole can move forward along the conveyor in order to bring the packed goods in front of the conveyor, after which the lifting means are able to place the packed goods on the floor of the container or on packed goods placed earlier on. When unloading the reversed order is followed. In this way said manipulator with the lifting means is suitable for packed goods such as crates and boxes which are wider than the conveyor and too heavy for manual handling, and particularly suitable for crates and boxes and the like which are almost as wide as the container.

Preferably the lifting means comprises a rod mechanism. In this way in a simple manner a vertical movement can be realised, in which the tool remains horizontal.

Preferably the tool comprises a horizontal support, such as a fork, at each means. In this way the packed goods can be engaged at the bottom side.

Preferably the tool comprises a movable horizontal ram or plunger to slide the packed goods from the horizontal support. This may be necessary when the packed goods are not supplied on a pallet or the like. The plunger can, seen in the horizontal plane, be arranged between two supports of the fork.

Preferably both means are coupled. Merely one control of the lifting means is needed then, and the packed good will always be engaged on both sides in a similar manner. A crate and the like which is almost as wide as the container will not get stuck in the container as a result.

According to a preferred embodiment in all embodiments the manipulator is provided with one or several wheels for supporting the manipulator on the floor of the container. The wheel or wheels are able to carry part of the weight of the packed goods and the end of the transport device (the remainder of the weight is accommodated by the fixed end of the transport device), and determine a fixed distance between the top side of the transport device and the floor of the container, so that the packed goods can be (semi-)automatically manipulated when loading and unloading the container. Moreover the wheels are able to offer support to the (outrigging) end of the conveyor via the manipulator.

Preferably the transport device is a telescopic conveyor.

It is noted that from US patent specification 5.174.708 a loading construction for loading spaces is known, in which the loading construction is located outside of the loading space and comprises a telescopic conveyor as well as a manipulator which is supported on fixed rails outside of the loading space and has to reach into the loading space with an arm.

US patent specification 5.015.145 shows a loading manipulator, which is positioned at the end of a conveyor and which is provided with a swivel arm having vacuum grippers, which arm can be swivelled about a horizontal axis. The orientation of the packed goods here is reversed, which can be objectionable for many products. Moreover the vertical up-and-down movement requires a lot of power when swivelling.

From Swiss patent specification 648.806 a double manipulator is known, which is placed at the end of a conveyor.

From International patent application W098/51598 an unloading device is known, which is destined to be hingeably connected to the end of a conveyor.

The invention will be elucidated on the basis of two exemplary embodiments, referring to the drawing.

Figure 1 shows a first exemplary embodiment of the device according to the invention in top view, connected to a supply/discharge transport device.

Figure 2 shows the device of figure 1 in side view.

Figure 3 shows the end of the transport device according to figure 2 at a larger scale.

Figure 4 shows a detail of an alternative embodiment of the end of a manipulator according to the invention, with which a load can be picked up.

Figure 5 shows another exemplary embodiment of the device according to the invention in side view, in which only the end with the manipulator is shown.

Figure 6 is a top view of figure 5.

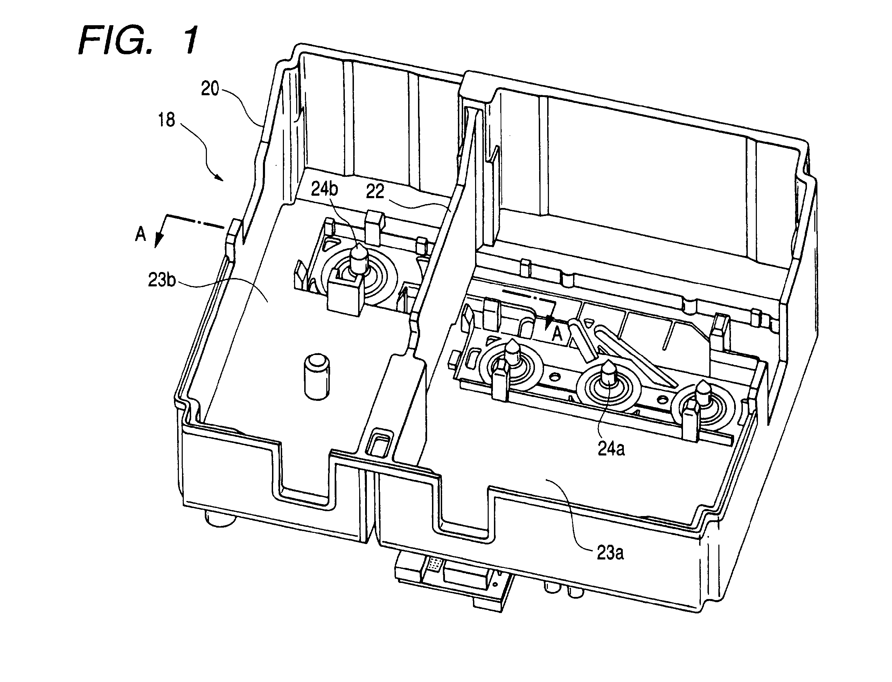

Figure 1 shows a first embodiment of the invention in top view. Shown is a telescopic conveyor 1 which consists of a fixedly positioned portion 1 a, in which a middle portion 1b and an end portion 1c can telescope. The telescopic conveyor 1 is positioned in a loading station 2 and connects to supply and discharge conveyors 3 and 4. For that matter the fixed portion 1a can be moveable to other loading doors of the loading station; when loading and unloading its position is fixed. Additionally the telescopic conveyor may consists of more or fewer parts. The telescopic conveyor can also be used without the supply and discharge conveyor. In figure 1 barrels 50 are transported, but instead of that other packed goods such as crates and boxes and the like can be transported.

In the extended position drawn the telescopic conveyor 1 extends into a trailer 5 which with its rear end is placed against the loading station 2. Near the end 6 of the telescopic conveyor 1 extending in the trailer 5, a manipulator 10 is arranged, which will be described in more detail below. With the manipulator 10 the barrels 50 can be lifted from the end 6 of the telescopic conveyor 1 and placed in the trailer. Drawn is the position 10a in which the manipulator 10 is positioned such that it is able to lift two barrels 50 from the end 6, and the position 10b in which the manipulator 10 places the barrels in the trailer 5. Additionally the barrels 50 can be lifted from the trailer onto the conveyor 1 with the manipulator 10.

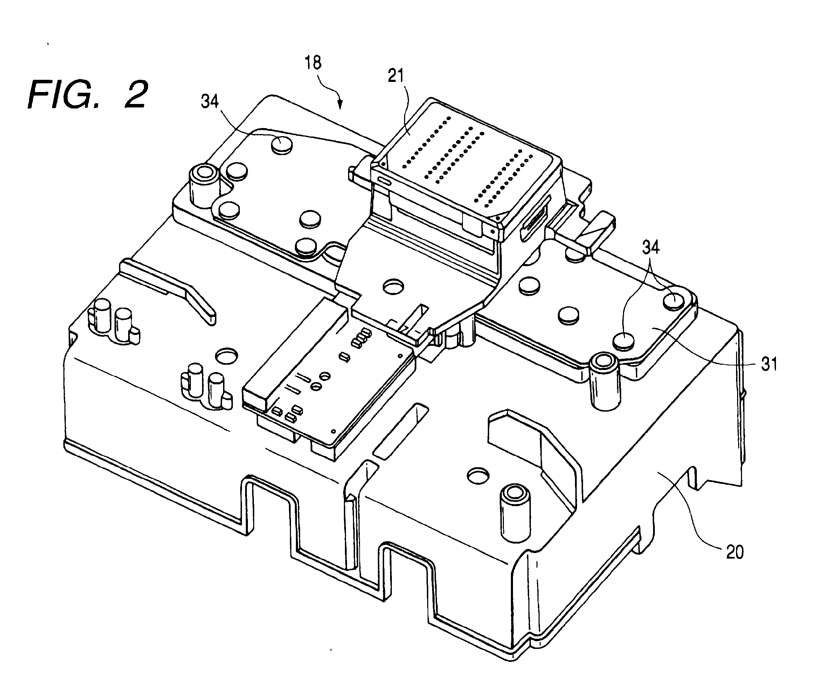

Figure 2 shows the device according to figure 1 in side view. It can clearly be seen here that the manipulator 10 has a tool 16, on which suction cups 18 are arranged, in which the tool 16 can be brought into various positions with the help of manipulator 10, of which positions two are shown by dotted lines.

In figure 2 it can also be seen that the fixed portion 1a of the telescopic conveyor 1 is provided with hydraulic cylinders 7, with which the front, extendable end of the telescopic conveyor 1 can be placed somewhat upwardly inclined. This is done in order to prevent that the wheels of the manipulator 10 are impeded by the transition between the trailer 5 and the loading station, where a difference in level will usually be present and by the supply and discharge conveyor 4, or other irregularities.

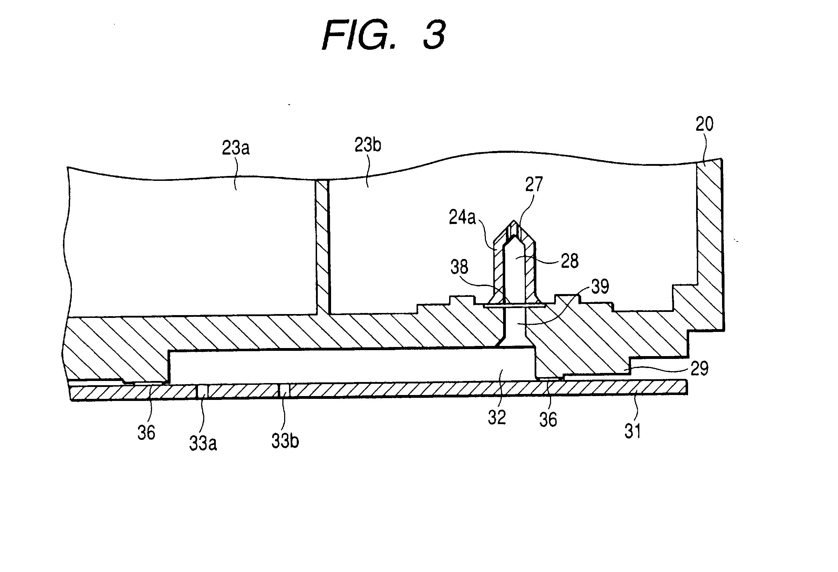

Figure 3 shows the end portion 1c of the telescopic conveyor 1 with the end 6 and on it the manipulator 10 at a larger scale. The manipulator 10 consists of a trolley 11, which with the help of guidances 12 is moveable along guidance tracks 8 on either side of the end 6 of the end portion 1 c of the telescopic conveyor 1 in the directions C. Said guidance tracks 8 are arranged at the bottom side so that the supplied or discharged packed goods are not hindered by the manipulator 10. At the bottom side the trolley 11 of the manipulator 10 is provided with a swivel arm 13, which with the help of projecting wheels 14 is able to find support on the floor of the trailer 5. The swivel arm 13 can be swivelled in the directions D about the vertical central axis of the trolley 11, within boundaries determined by the wheels. The location of the swivel arm 13 is chosen as low as possible, so as to be able to bring the tool as low as possible for engaging the loads placed on the loading floor as well. At its end the swivel arm 13 is provided with a vertical guidance 15, along which the tool 16, with a trolley which is not further shown, is moveable in the directions A, by means of for instance band cylinder 17. The vertical guidance 15 can be rotated in directions B about its own axis S.

The operation of the device according to the invention is as follows. When an empty container or trailer 5 is placed with its rear end near the loading door of the loading station 2, the loading door of the loading station is opened and the telescopic conveyor 1 is telescopingly introduced into the trailer 5, after which the manipulator 10 with its wheels 14 is placed on the floor of the trailer 5 by operation of the hydraulic cylinders 7. Subsequently barrels 50 are supplied two by two, or one at a time, over the telescopic conveyor 1 to its end 6. There the manipulator 10 is placed in position 10a, and the barrels 50 are engaged with the help of suction cups 18. Subsequently the tool 16 is moved a little upwards along the vertical guidance 15 in order to lift the barrels 50, after which the entire manipulator 10 is moved forwards, while simultaneously the vertical guidance 15 is rotated about its axis in order to orient the barrels to the front. When the vertical guidance 15 is finally brought beyond the end of the telescopic conveyor 1, the swivel arm 13 can be swivelled in order to bring the barrels 50 near a side wall of the trailer 5, the vertical guidance 15 simultaneously rotating about its own axis in order to keep the barrels 50 in the correct position so that the manipulator 10 in its position 10b is able to put the barrels 50 in a corner of the trailer 5. The subsequent barrels can subsequently be placed two by two, or one at a time next to, on and in front of the barrels already placed there. When unloading a trailer 5 with barrels, one or two barrels engaged which are still in a row of barrels, are often first swivelled a little in order to be able to easily take them out of the row, without scraping along the wall of the trailer 5.

Instead of the barrels 50 as shown also boxes, crates and the like can be placed in or unloaded from the container or trailer 5 with the help of the manipulator 10.

The manipulator 10 is pneumatically driven. When the sizes and the stacking pattern of the packed goods are known, it is possible to automatically or semi-automatically load and unload by the manipulator 10. Both loading and unloading can be carried out automatically; deviations from the pattern or goods can be adjusted semi-automatically.

In a first exemplary embodiment according to the figures 1 through 3 the telescopic conveyor 1 is belt conveyor, of which the end 6 is designed as roller conveyor so to be able to offer better support when placing the packed good, such as the barrels, on the telescopic conveyor.

It will be understood that instead of the order of movement of the tool and the manipulator 10 as described above, other orders of movement are possible, with which the packed goods can be placed from the telescopic conveyor 1 into the container or trailer 5 or can be placed out of the container or trailer 5 onto the telescopic conveyor 1.

It will also be understood that, instead of a pneumatic drive of the manipulator 10 an electric or hydraulic drive could also be chosen. Additionally the manipulator 10 can be arranged at the end of other types of continuous conveyors, such as a conveyor of a fixed length which can be moved in its entirety.

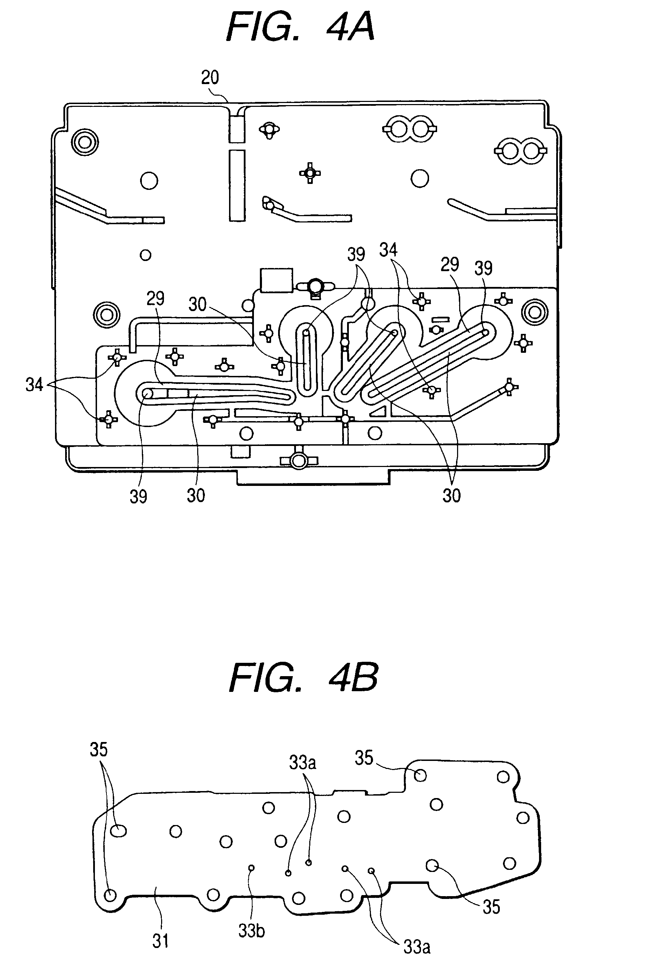

An alternative embodiment shown in figure 4 in which comparable parts have the same reference numbers increased by 100, is particularly advantageous because of the possibility of picking up barrels, boxes etcetera 150 when these are not placed straight on top of each other. Shown is that the barrel 150a is shifted over a distance d on the barrel 150c. When the manipulator is brought near the barrels, there is a chance that the end of the swivel arm (not shown) has been brought at a short distance from the barrel 150c, but that then the carrier 116' with the suction cup 118 cannot reach onto the wall of the barrel 150a, because the distance d is too large.

According to the invention this is solved by connecting the tool 116 in such a way to the trolley 144 with which the tool can be moved along the vertical guidances 115, that a movement in the direction E is possible. In this example this is achieved by means of two plates 145a and 145d which are connected with the trolley 144 and the carrier 116', (the latter by means of vertical pivot pin connection 142), respectively. Between the plates 145a and 145b a linking construction is present of two rods 143a and 143b which are each fixedly connected with one end to a plate 145a and 145b concerned and with the other end can be slid along it in vertical direction, yet still durably connected.

For the movement of the plates 145a, 145b with respect to each other use is made of bellows 141a, 141b, which can be pneumatically pressurized with suitable means that are not further shown in order to expand. A draw spring may be provided here which with the ends is attached to the plates 145a, 145b, 141b in order to automatically letting them move towards each other when the pressure in the bellows 141a, 141b decreases.

Two or more of such constructions from the plate 145a up to and including the suction cup 118, so including linkage and bellows, can be attached next to each other on the trolley 144 in order to pick up several loads at a time, in which it is not objectionable that these loads are somewhat offset with respect to each other.

The pivot pin connection 142 renders the levelling of the position of the carrier 116' possible, both about a vertical axis and (to some extent) about a horizontal axis -as a result of the rubber sleeve in it-.

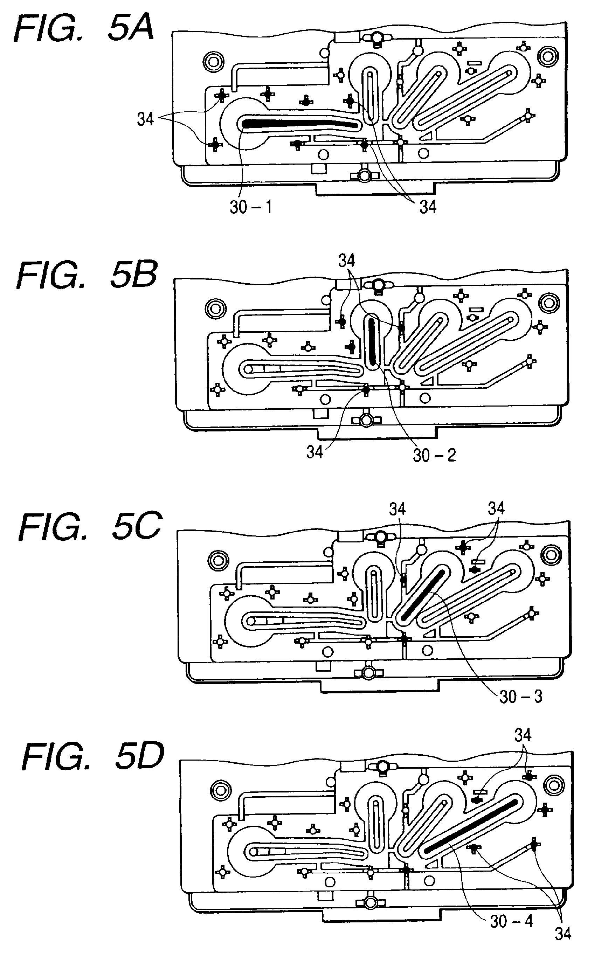

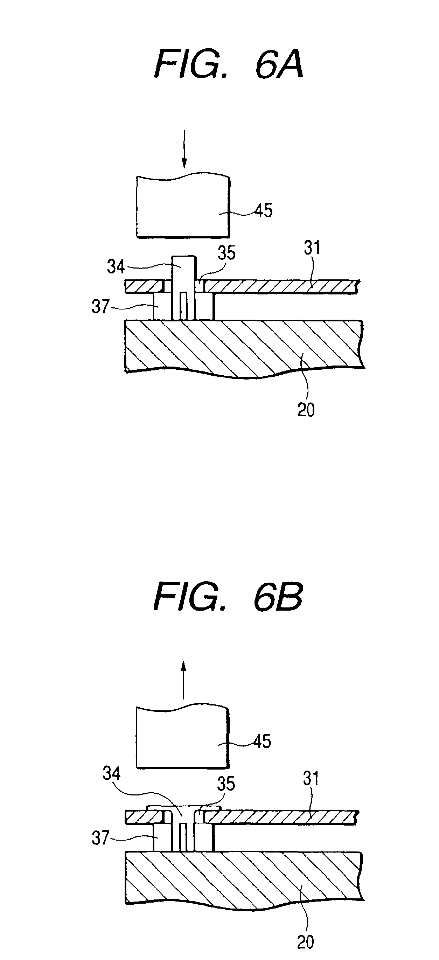

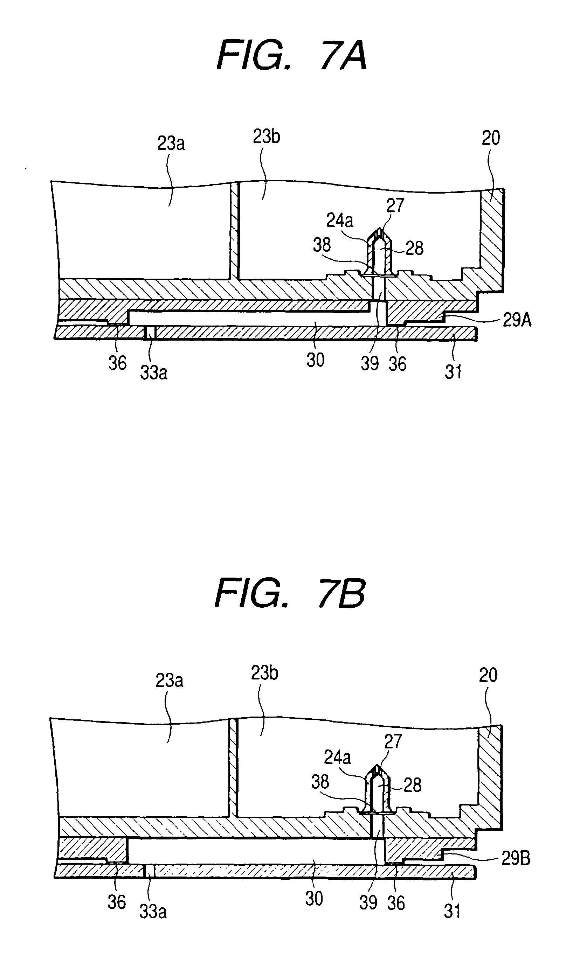

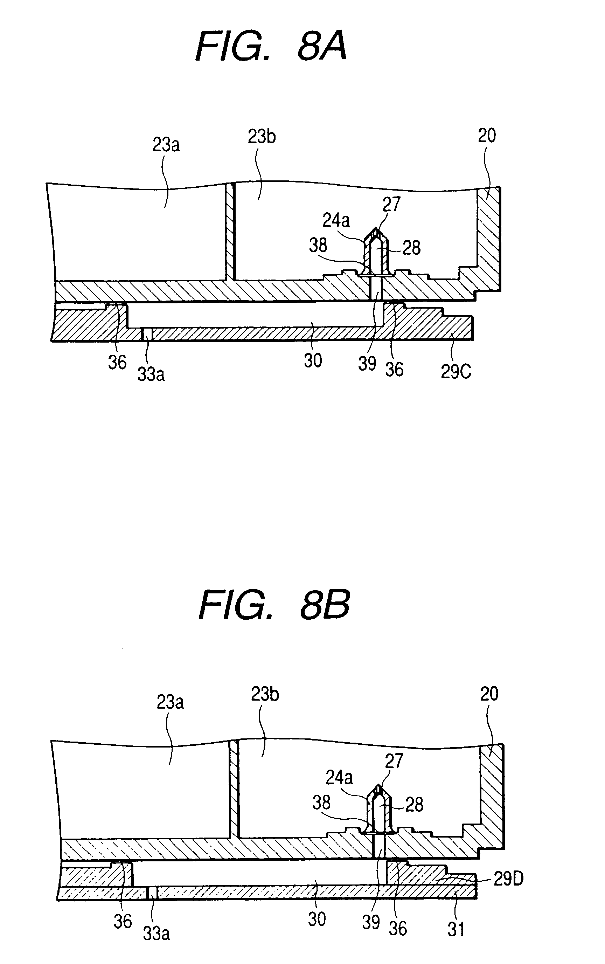

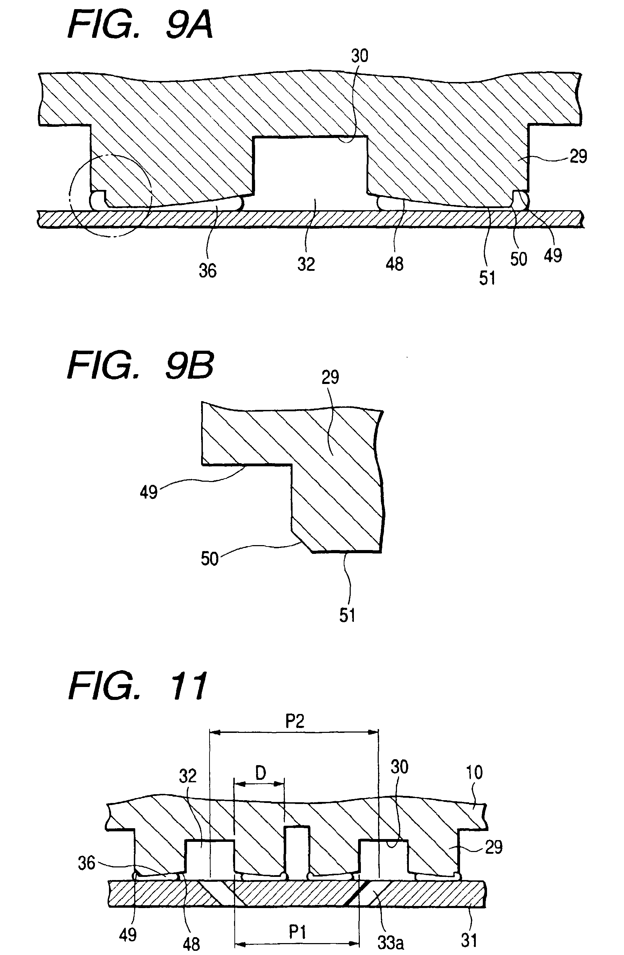

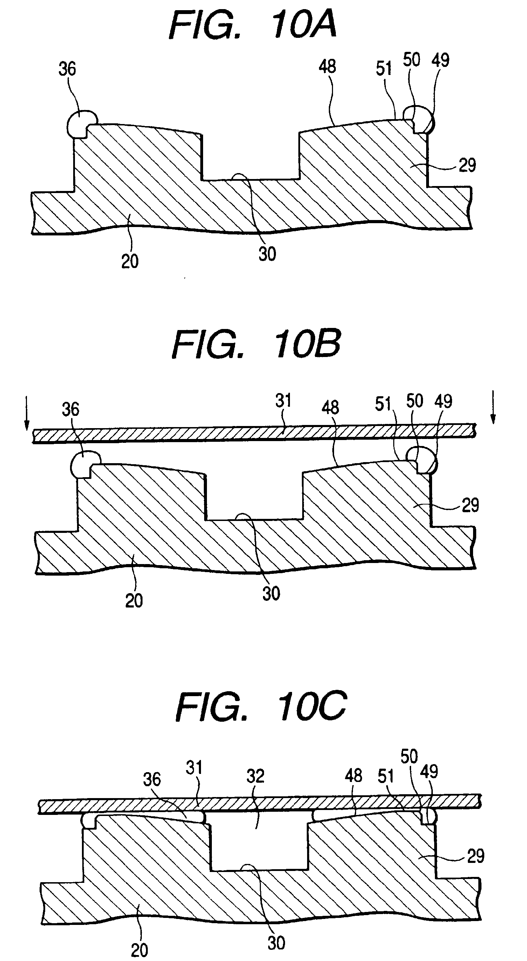

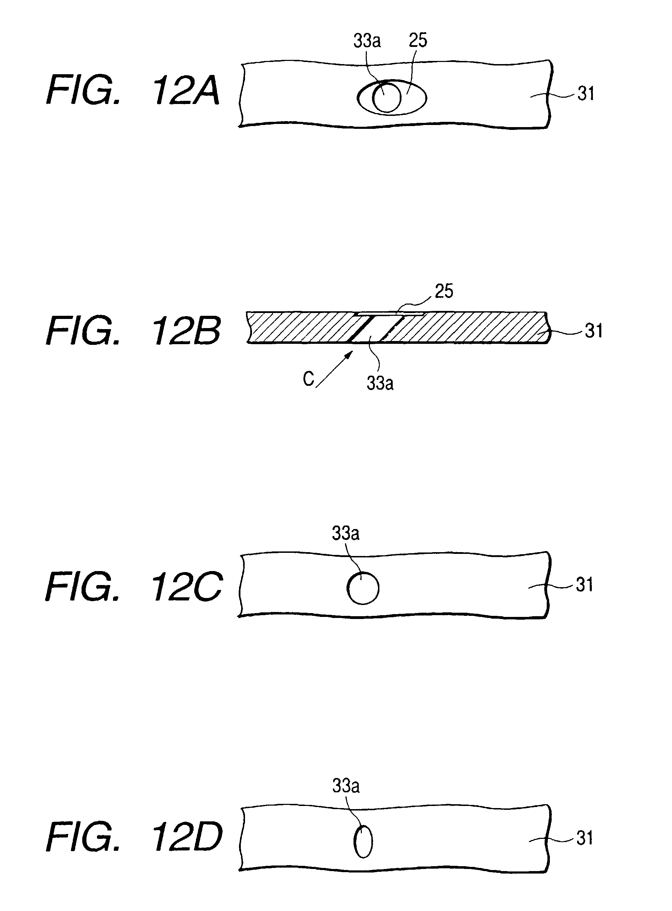

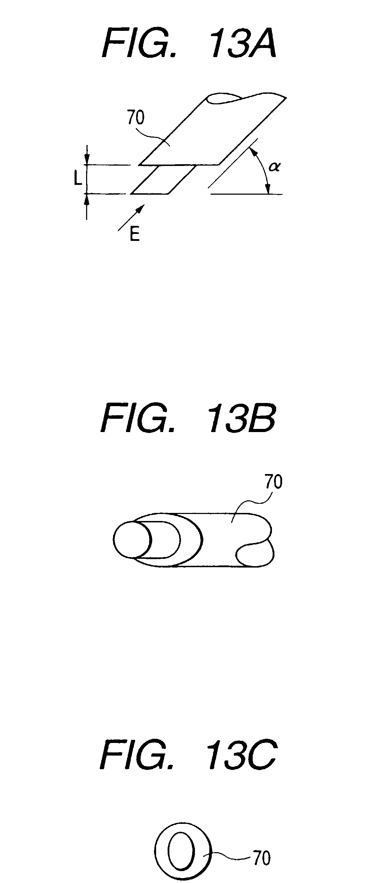

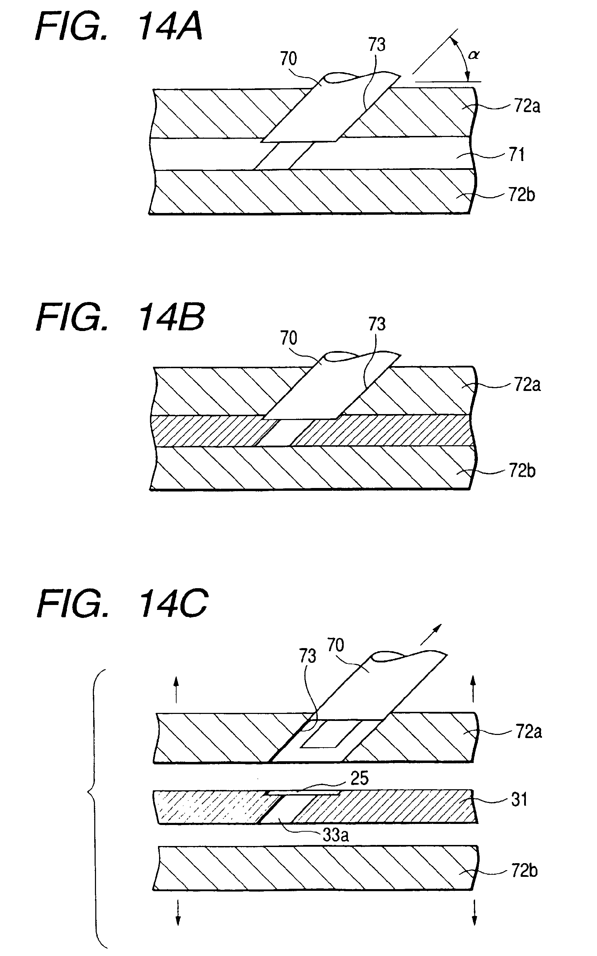

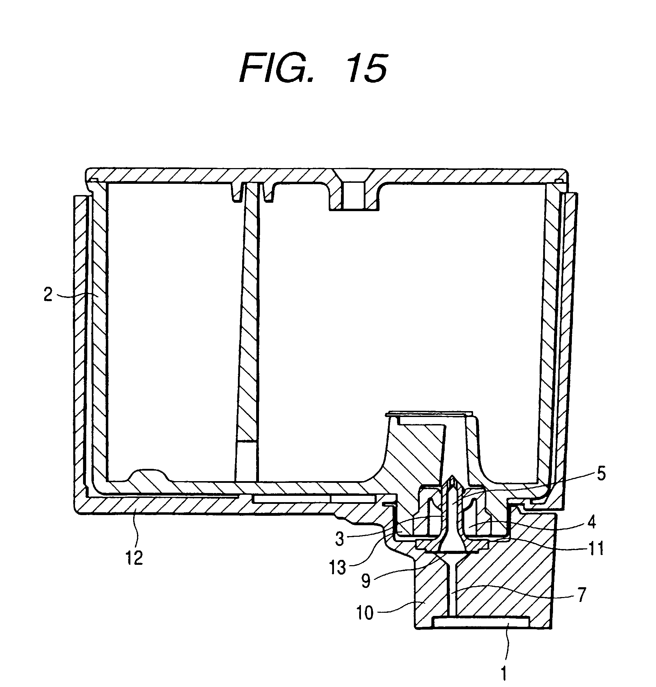

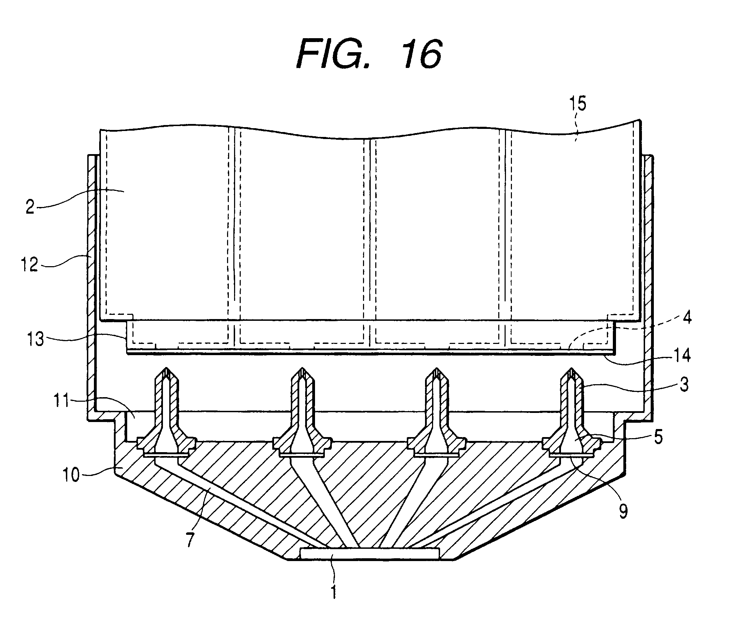

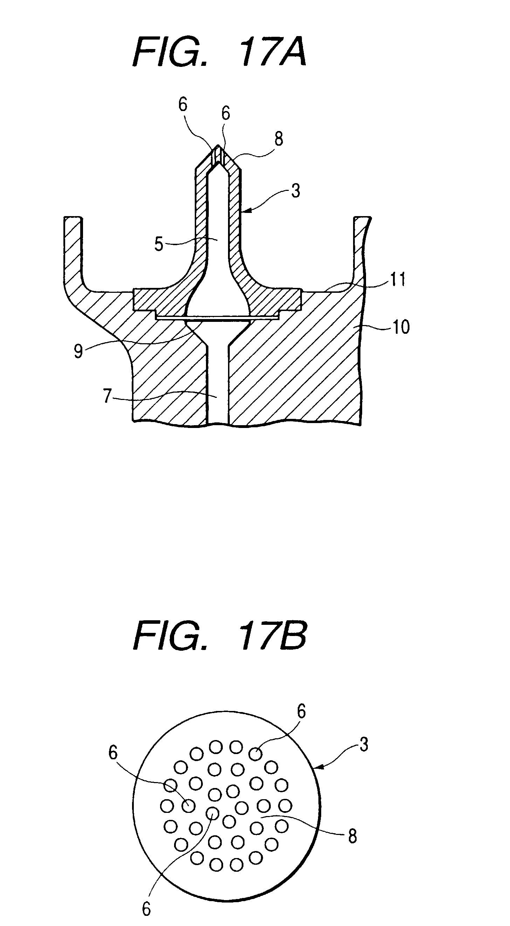

A third exemplary embodiment of the invention is shown in the figures 5 and 6. Figure 5 shows the device in side view. Here again the end portion 1c of the telescopic conveyor 1 can be seen, with at its bottom side on either side the guidance tracks 8. Along the guidance tracks 8 a trolley 21 is moveable, which rests on the floor of the trailer 5 with wheels 22. The trolley 21 does not extend beyond the end portion 1c of the telescopic conveyor 1. By means of a parallel rod structure 24, 25 two lifting means having a horizontal support plate or support fork 29 and vertical plate 23 are attached to the trolley 21 on either side of the end portion 1 c, in which the parallel running rods 24, 25 are attached to the trolley 21 by means of hinge points 26, 27. The lowermost rods 25 are connected to a hydraulic cylinder 28, as a result of which the rods 25 on either side of the end portion 1c can simultaneously be rotated. Because of the rod structures 24, 25 the lifting means 23, 29 are simultaneously moved upwards or downwards, in which the lifting arms 29 remain horizontal. A cylinder 30 is attached to the plates 23, of which cylinder the plunger that is not further shown can extend through the plate 23 so that it can keep on pressing against the crate 51 with its end.

The operation of the third exemplary embodiment is as follows. When a box or crate 21 is supplied over the telescopic conveyor 1, the arms 25 are swivelled such that the lifting means 23, 29 are brought entirely under the top surface of the end portion 1c. The crate 51 is now brought in a position as shown in figure 5 and 6 by the full lines. Subsequently the lifting means 23, 29 are swivelled upwards with the help of the pneumatic cylinder 28, in which the lifting arms 29 lift the crate a little so that it comes free from the end portion 1c. Subsequently the trolley 21 is moved forwards along the guidance tracks 8, so that the crate 51 is present beyond the end of the end portion 1c, after which it is placed on the floor of the trailer 5. When the crate 51 is not placed on a pallet, it is kept in its place with the horizontal plungers in cylinders 30, whereas the remainder of the manipulator 20 moves backwards. When the crate 51 has to be placed on a crate placed earlier on in the trailer 5, the crate 51 is lifted with the help of lifting means 23, 29 whereas the trolley 21 moves forward, in order to place it on the crate placed earlier on.

It will be understood that the here as well instead of a telescopic conveyor another type of continuous conveyor can be chosen, and that driving the manipulator 20 may be electric, hydraulic or pneumatic.

It will also be understood that instead of the rod mechanism another type of mechanism can be chosen to move the lifting means up and down, whereas the engagement planes remain horizontal.

Although the invention has been elucidated on the basis of three exemplary embodiments the invention is not limited to them. The scope of protection is determined by the following claims.

## Claims

**1.** Device for continuous transport of packed goods, such as barrels, boxes and crates, in which an elongated end of the transport device is adapted to extend into a container, trailer and the like, for loading or unloading the packed goods in the container, **characterized in that** a manipulator is arranged at the end of the transport device, in particular a telescopic conveyor, which manipulator is provided with a tool to engage the packed goods, the manipulator being designed such that with the help of the tool packed goods can be placed from the transport device into the container, and that packed goods can be placed out of the container on the transport device, in which the engagement tool is moveable in longitudinal direction along the end of the transport device.

**2.** Device according to claim 1, in which the engagement tool is moveable in vertical direction with respect to the end of the transport device.

**3.** Device according to claim 2, in which the engagement tool is rotatable substantially about its own vertical axle.

**4.** Device according to claim 2 or 3, in which the engagement tool is swivelling about a vertical axle which is situated at a distance from the engagement tool.

**5.** Device according to claim 4, in which the vertical swivel axle intersects the longitudinal axis of the transport device and is moveable with the engagement tool in longitudinal direction with respect to the transport device.

**6.** Device according to any one of the preceding claims, in which the manipulator comprises horizontal guiding means in order to move the manipulator along a guidance at the bottom side of the end of the transport device.

**7.** Device according to claim 6, in which the manipulator has a substantially horizontal arm of which an end is connected to the horizontal guiding means to be swivelling about a vertical axle, and of which the other end is connected to the vertical guiding means for the tool.

**8.** Device according to claim 7, in which the vertical guiding means are rotatable about their vertical axle.

**9.** Device according to any on of the preceding claims, in which pneumatic driving means are arranged to drive the manipulator.

**10.** Device according to claim 9, in which control means are provided to automatically operate the manipulator when loading from a trailer or container, and to semi-automatically operate the manipulator when unloading from a trailer or container.

**11.** Device according to any one of the claims 1-10, in which the tool is provided with suction cups to engage/hold the packed goods.

**12.** Device according to claim 11, in which the tool comprises a vertically moveable trolley and a carrier for the suction cups, in which means are present between the carrier and the trolley for adjusting the distance therebetween in horizontal direction.

**13.** Device according to claim 12, in which the adjustment means comprise bellows that are expandable in horizontal direction, in which preferably between the carrier and the trolley a biassing means is present for urging the carrier and the trolley towards each other when the bellows is relieved.

**14.** Device according to claim 12 or 13, in which the carrier and the trolley are connected to each other by means of a hinge having a vertical axis and which preferably comprises a rubber bearing sleeve.

**15.** Device according to claim 12, 13 or 14, in which between the trolley and the carrier a lifting tongs construction is present parallel to the bellows for stiffening the connection against bending under gravity.

**16.** Device according to any one of the claims 11-15, in which several suction cups are present next to each other for engaging a same load.

**17.** Device according to any one of the claims 12-16, in which several carriers are positioned next to each other, preferably two, which, independent from each other, are connected to the trolley.

**19.** Device according to claim 7, in which on both sides of the transport device the manipulator comprises a means to move a load holding tool, which preferably contains a horizontal support plate or support fork, vertically at the end of the means, which means preferably contains a rod mechanism.

**20.** Device according to claim 19, in which the tool comprises a movable horizontal ram or plunger to slide the packed goods from the horizontal support.

**21.** Device according to claim 19 or 20, in which both means are coupled.

**22.** Device according to any one of the preceding claims, in which the manipulator is provided with one or several wheels for supporting the manipulator on the floor of the container.
